# EUROPÄISCHE PATENTANMELDUNG

(11) **EP 0 788 984 A1**
(43) Veröffentlichungstag der Anmeldung: **13.08.1997**
(21) Anmeldenummer: 97102038.3
(22) Anmeldetag: 09.02.1997
(51) Int. Cl.: B65F 1/10, B65F 1/14, G01G 19/415

(54) **Verfahren und Vorrichtung zur mengenkontrollierten Müllabgabe in eine Müllsammeleinrichtung**

(30) Priorität: 09.02.1996 DE 19604770
(71) Anmelder: Alois Pöttinger Maschinenfabrik GmbH, 4710 Grieskirchen (AT)
(72) Erfinder: Brandstätter, Erich, Dipl.-Ing., 4625 Offenhausen (AT); Groisböck, Franz, Ing., 4713 Gallspach (AT); Geyer, Josef, 94548 Innernzell (DE); Zehetleitner, Walter, 4710 Grieskirchen (AT)
(74) Vertreter: Dupal, Helmut, Dipl.-Ing.

(57) **Zusammenfassung**

Verfahren zur mengenkontrollierten Müllabgabe in eine Müllsammeleinrichtung (1) und zur Bestimmung (3) und Berechnung (6) des abgegebenen Mülls, bei dem eine abgegebene unbestimmte Müllmenge (8) einer Müllsammeleinrichtung (1) zugeführt wird, in der die Müllmenge (8) bestimmt wird, die anschließend selbsttätig in einen Müllsammelbehälter (5) verbracht und insbesonders verdichtet (4) wird und insbesonders mit dem Müllsammelbehälter (5) zu einer Mülldeponie oder zu einer Großsammelstelle, insbesonders für die Weiterverarbeitung, transportiert wird, wobei die abgegebene unbestimmte Müllmenge (8), nach Kennung (9) der Abgabeberechtigung, der Menge nach bestimmt (3) wird und diese Mengendaten unter Zuordnung der Kennung (9) gespeichert werden und darauf insbesonders die Entsorgungsgebühr nach einem vorgegebenen Tarif berechnet (6) und abgerechnet (2) werden oder die Daten unter Zuordnung der Kennung (9) für eine spätere Abrechnung gespeichert werden, worauf die bestimmte Müllmenge (8), insbesonders nach vorheriger Verdichtung (4), dem Müllsammelbehälter (5) zugeführt wird.

## Beschreibung

Die Erfindung betrifft ein Verfahren zur mengenkontrollierten Müllabgabe und die Vorrichtung zur Durchführung des Verfahrens nach dem Oberbegriff des Anspruches 1 und des ersten Vorrichtungsanspruches.

Bisher wird der Müll entweder aus einzelnen Haushalten dezentral eingesammelt, zumeist mit Müllpreßwagen und zu einer Deponie oder einer Weiterbehandlungseinrichtung zur Verarbeitung oder zu einer Müllverbrennungsanlage o.a.m. gebracht oder der Müll mehrerer Haushalte wird an einem zentralen Sammelplatz in große Müllsammelbehälter eingeworfen und der dann gesammelte Müll abtransportiert.

Als Müll werden hier, zusätzlich zum Restmüll oder zum nicht getrennten Müll, auch alle Altstoffe, die einer selektiven Sammlung unterliegen, wie Glas, Papier, Kunststoffe, Biomüll, bezeichnet.

Die Berechnung der entsorgten Müllmenge erfolgt pauschal oder nach Zahl der zur Verfügung gestellten Sammelbehälter und deren Leerungshäufigkeit, nicht aber durch Bestimmung der eigentlichen Müllmenge. Schon bei dieser Abwicklung bedingt die Verwaltung der Entsorgungsgebühren einen sehr großen Aufwand, der die eigentlichen Entsorgungskosten belastet.

Es ist auch ein Verfahren und eine Vorrichtung bekannt geworden, bei dem Müll in einem gekennzeichneten Müllbehälter gesammelt und in einen Müllpreßwagen nach Einlesen der Kennung in einen Rechner auf den Wagen geladen wird, nachdem das Füllvolumen und die Identität des Müllbehälters für die spätere Verrechnung festgestellt wurden.

Dieses Verfahren erfordert die Kenntlichmachung der Müllbehälter für die Identifizierung und eine Mengenbestimmung nach dem Volumen die keine Rücksicht auf die Verpreßbarkeit des abgelieferten Mülls nimmt, sodaß auch keine Abrechnung nach der abgegebenen Müllmenge im Sinne des Masseinhaltes möglich ist.
Aufgrund der Sammlung des Mülls in einzelnen verhältnismäßig kleinen, leicht handhabbaren Sammelbehältern ist eine Verdichtung in dieser Stufe nicht möglich, wodurch häufiger entsorgt werden muß oder eine entsprechend große Kapazität von Sammelbehältern bereitgestellt werden muß.

Die Anbringung der erforderlichen Vorrichtung an einem Fahrzeug setzt diese großen Belastungen aus und erfordert die Kennzeichnung der einzelnen Müllbehälter mit besonderen Vorrichtungen, die überdies gegen Beschädigungen zu sichern sind. Darüberhinaus ist die Abrechnung der abgelieferten Müllmenge in jedem Einzelfall, nach einer zentralen Zwischenspeicherung notwendig, wodurch der Verwaltungsaufwand der Entsorgung noch erhöht wird.

Die Erfindung bezweckt, beim Sammeln von Müll mehrerer Haushalte oder des Gewerbes ein Verfahren zu schaffen, bei dem die zur Weiterbehandlung abgegebene Müllmenge genauer bestimmt wird und nach Berechnung der Entsorgungsgebühr diese sofort bei Abgabe der Müllmenge in Rechnung gestellt werden können, wodurch der Verwaltungsaufwand nachhaltig gesenkt werden kann und bei dem der Transport des gesammelten Mülls durch vorangehende Volumsverkleinerung weiter vereinfacht und verbilligt wird.
Weiters ist es Ziel der Erfindung eine Vorrichtung zu schaffen mit der dieses Verfahren durchgeführt werden kann.

Diese Aufgabe wird bei einem Verfahren und einer Vorrichtung der eingangs genannten Art mit den Merkmalen des kennzeichnenden Teiles des ersten Verfahrensanspruches und des ersten Vorrichtungsanspruches gelöst.

Die Unteransprüche betreffen besonders vorteilhafte Ausgestaltungen des Verfahrens und der Vorrichtung dazu und bilden, zusammen mit dem Anspruch 1 und dem ersten Vorrichtungsanspruch, einen Teil der Beschreibung.

Durch die Gestaltung des Verfahrensablaufes mit einer Kennung der Abgabeberechtigung für Müll mit der Möglichkeit der Speicherung der Bestimmungsdaten der abgegebenen Müllmenge für eine spätere Abrechnung oder für eine unmitelbare Berechnung und Abbuchung von einem externen Datenspeichermittel, das gleichzeitig die Kenndaten in berührungslos lesbarer Form enthält, kann die Berechnung der Entsorgungsgebühr nach der Abgabeberechtigung jeweils entsprechend der angefallenen Einzelmenge und sofort vorgenommen und von dem Datenspeichermittel abgebucht werden. Dadurch ergibt sich mit dieser dezentralen Abrechnung ein außerordentlich verringerter Verwaltungsaufwand.
Es ist dann nicht mehr möglich, daß Müllsammelbehälter fremd benutzt werden.

Bei Abgabe der Müllmenge in Verpackungseinheiten ist die Behandlung in der Müllsammeleinrichtung besonders wegen der verringerten Verschmutzungsgefahr und der leichteren Transportierbarkeit vereinfacht.

Die Verdichtung der abgelieferten Müllmenge in dem Müllsammelbehälter bis zu einem voreinstellbaren Grenzwert vermindert die Anzahl der notwendigen Entsorgungsfahrten, die dann gezielt erst bei vollem Behälter erfolgen müssen.
Darüberhinaus ist das Überfüllen eines Müllsammelbehälters nicht mehr möglich.

Durch die Anzeige einer Störung wird ein Ablieferer nicht unnötige Abgabeversuche unternehmen, sondern auf ein anderes Gerät ausweichen und durch die zentrale Überwachung kann rasch Abhilfe geschaffen, die Entsorgung durchgeführt und die Entsorgungsfahrten besser koordiniert werden.

Durch die Bestimmung der Müllmenge nach dem Gewicht wird eine der tatsächlichen Belastung der Entsorgungskette entsprechende Abrechnung möglich.

Die Zusammenfassung der Vorrichtung für die Kennung, die Mengenbestimmung, die Abrechnung und die Verdichtung der Müllmenge zu einem Müllbehandlungsteil, der dem Müllspeicherteil vorgeordnet oder aufgesetzt ist, können auch bereits bestehende Müllsammelbehälter umgebaut werden; das Gleiche gilt für die Einrichtung eines Fernübertragungsteiles, z.B. mit drahtloser Kommunikation zu einer zentralen Steuerungsstelle.

Die Anzeige aller Schritte des Verfahrensablaufes auf dem Lese- und Einspeicherteil des Müllbehandlungsteiles der

Müllsammeleinrichtung ermöglicht eine einfache Bedienung durch den Müllablieferer.

Die Ausstattung mit einem Rechnerteil ermöglicht die Verwendung von berührungslos les- und beschreibbaren Datenspeichermitteln und die sofortige Berechnung der Ensorgungskosten, wobei auch eine Mehrzahl abgestufter Tarife, in Abhängigkeit von der Kennung zur Anwendung gelangen können..

Der Rechnerteil nimmt dabei die Daten der Kennung vom Lese- und Einspeicherteil und die Daten der Wägevorrichtung auf, speichert diese und berechnet die Entsorgungsgebühren und überträgt diese über den Speicherteil auf das Datenspeichermittel.
Dabei stellt der Wägevorgang eine zuverlässige und technisch verhältnismäßig einfache Methode dar.

Der Rechnerteil steuert weiters die Verriegelung der Beschikkungstüre für die Wägevorrichtung und das Öffnen und Schließen der Schleuse zur Verdichtungsvorrichtung und übernimmt von dieser Daten über den Verdichtungsdruck.

Der Rechnerteil übermittelt Störungsdaten und die Erschöpfung der Speicherkapazität des Müllsammelbehälters an den Fernübertragungsteil und ist für diese Aufgaben mit den entsprechenden Sensoren versehen. Dabei wird entweder bei Überschreitung eines Grenzgewichtes oder eines Grenzpreßdruckes eine Meldung über die Erschöpfung der Speicherfähikeit des Müllsammelbehälters bzw. der Müllsammeleinheit weitergegeben, sodaß eine rasche gezielte Entsorgung vorgenommen werden kann.

Die Erfindung wird anhand der Zeichnung beschrieben.
Es zeigt:

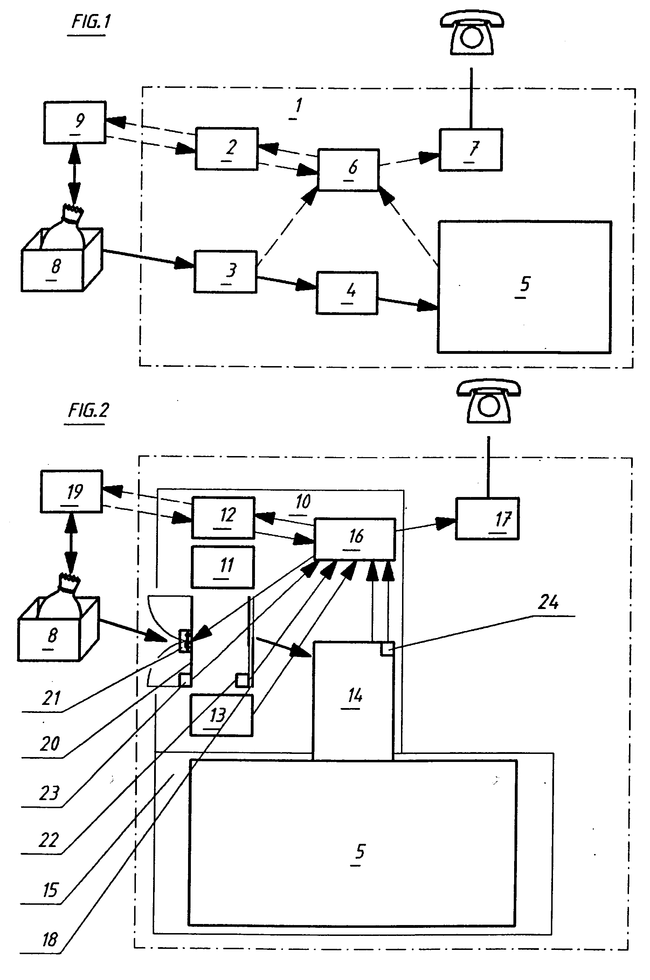

- Fig. 1: ein Verfahrensschema einer Müllsammeleinrichtung;
- Fig. 2: ein Blockschaubild einer Müllsammeleinrichtung;
- Fig. 3: ein Flußdiagramm des Verfahrensablaufes;
- Fig. 4: ein ergänzendes Flußdiagramm des Verfahrensablaufes mit Fernübertragung.

Bei einem Verfahren mit mengenkontrollierter Müllabgabe in eine Müllsammeleinrichtung 1 wird eine noch unbestimmte Müllmenge 8 nach Vornahme der Kennung 9 von einer Kennungsstelle 2 der Bestimmung 3 der Müllmenge zugeführt und anschließend einer Verdichtung 4 unterworfen und schließlich einem Müllsammelbehälter 5 übergeben.

Die Kennung 9 und die Daten der Bestimmung 3 der Müllmenge 8 werden einer Berechnung 6 unter Einbeziehung eines vorgegebenen Tarifes zugeleitet, die Abrechnung 2 zur Anzeige gebracht und von einem Datenspeicherteil 19 abgebucht wird.

Ebenfalls der Berechnung 6 zugänglich sind alle Schritte des Verfahrensablaufes, sodaß bei dessen Störung oder bei Erschöpfung der Speicherfähigkeit des Müllsammelbehälters 5 eine Übermittlung der Steuerungsdaten des Verfahrensablaufes an eine zentrale Steuerungsstelle, vorzüglich drahtlos, erfolgen kann oder von dieser aus in regelmäßigen Zeitintervallen abgefragt werden kann.

Die Müllsammeleinrichtung 1 besteht aus einem Müllspeicherteil 15, der im wesentlich den Müllsammelbehälter 5 umfaßt und aus dem aufgesetzten Müllbehandlungsteil 10.
Weiters ist zur übermittlung der Daten an eine zentrale Steuerungsstelle ein Fernübertragungsteil 17 angeschlossen. Der Müllbehandlungsteil 10 umfaßt einen Anzeigeteil 11 an dem die für den Müllablieferer wichtigen Verfahrensabläufe angezeigt werden und einen Lese- und Einspeicherteil 12, in dem ein externes Datenspeichermittel 19, wie eine Chipkarte, gelesen und beschrieben werden kann, sowie eine Wägevorrichtung 13 für die einzeln abgegebene Müllmenge 8 und eine Preßvorrichtung 14 zur Verdichtung des Mülls.

Ein Rechnerteil 16 übernimmt die vom Lese- und Einspeicherteil 11 abgegebenen Daten zur Kennung und zur Berechnung der Entsorgungsgebühr, die über den Lese- und Einspeicherteil 11 auf das Datenspeichermittel 19 geschrieben und damit abgebucht werden.
Weiters ist eine Beschickungstüre 20 vor der Wägeeinrichtung 13 angeordnet, die mit einer Riegelvorrichtung 21 verschlossen gehalten wird, bis sie vom Rechnerteil 16 nach Kennung 9 der Abgabeberechtigung geöffnet wird und nach Übergabe der gewogenen Müllmenge 8 durch eine Schleuse 18 an die Preßvorrichtung 14 wieder geschlossen wird.

Die Öffnung und Schließung der Schleuse 18 geschieht ebenso durch Steuerung vom Rechnerteil 16 aus, wie die Auslösung der Betätigung der Preßvorrichtung 14.

Für die Verfahrenssteuerung ist der Rechnerteil 16 mit Stellungssensoren 22 und 23 an der Schleuse 18 und an der Beschickungstür 20 und mit einem Drucksensor 24 an der Preßvorrichtung 14 zur Bestimmung des Füllstandes des Müllsammelbehälters 5 versehen und erhält die Daten der Kennung 9 vom Lese- und Einspeicherteil 12 und von der Wägevorrichtung 13 über die Bestimmung der eingegebenen Müllmenge 8.

Der Rechnerteil 16 ist mit dem Fernübertragungsteil 17 zur Übermittlung von Daten über den Verfahrensablauf, besonders über die Erschöpfung der Speicherfähigkeit des Müllsammelbehälters 5, verbunden.

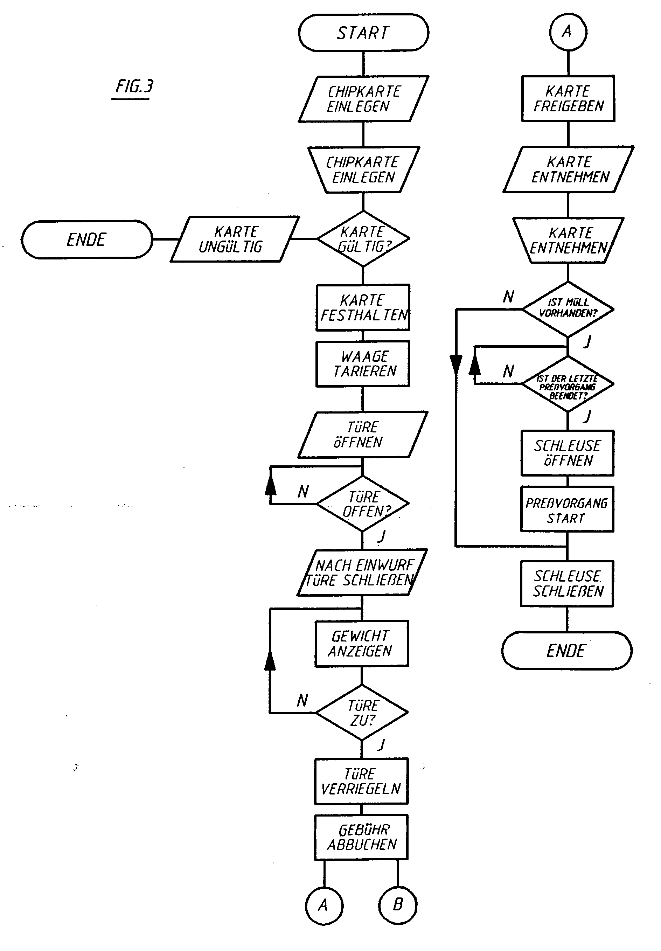

Im Flußdiagramm Fig. 3 sind die einzelnen Verfahrensschritte beschrieben, beginnend mit dem Start des Verfahrensablaufes, mit der Aufforderung zum Einlegen der Chipkarte 19 für die Kennung 9, dem Einlegen der Chipkarte 19 und der Prüfung der Abgabeberechtigung, dem Tarieren der Waage 13, dem Öffnen der Beschickungstüre 20 und der Eingabe der Müllmenge 8.

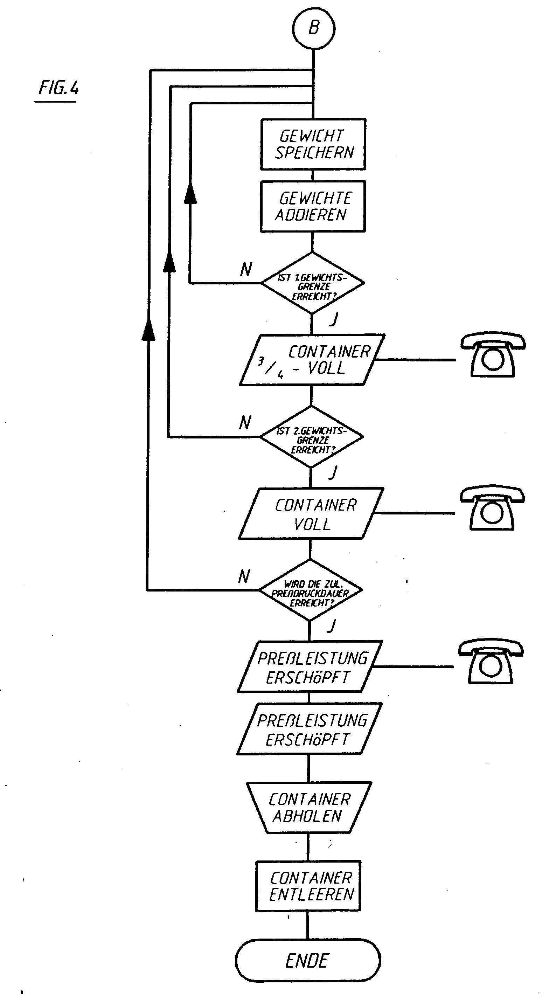

Darauf folgt das Schließen der Beschickungstüre 20, die Wägung 3, die Anzeige 2 der Wägung, das Verriegeln der Beschikkungstüre 20 und das Abbuchen 2 der Entsorgungsgebühr von der Chipkarte 19 und deren Freigabe.
Anschließend daran erfolgt gleichzeitig die Verzweigung zum Flußdiagramm in Fig. 4 und die Fortsetzung des Verfahrens mit der Prüfung der Preßvorrichtung 14, dem Öffnen der Schleuse 18 und nach Übergabe der gewogenen Müllmenge 8 mit dem Schließen der Schleuse 18 und dem Preßvorgang und endet mit der Übergabe der gepreßten Müllmenge 8 in den Müllsammelbehälter 5.

In Fig. 4 sind die Verfahrensschritte für die Übermittlung der Füllstandsdaten des Müllsammelbehälters 5 durch den Fernübertragungsteil 17 der Müllsammeleinrichtung 1 bis zum Entleeren des Müllsammelbehälters 5 wiedergegeben, dabei wird zunächst das Gewicht der einzelnen Müllmenge 8 gespeichert und zur Summe des Speichergewichtes addiert, dann wird der Füllstand des Müllspeicherteiles 15 überprüft und bei drei Viertel des Vollstandes oder bei Vollstand vom Rechnerteil 16 über den Fernübertragungsteil 17 an die Steuerungsstelle gemeldet.

Weiters wird nach Überprüfung des Preßdruckes in der Preßvorrichtung 14 die Erschöpfung der Preßleistung und damit der Volumensvollstand vom Rechnerteil 16 festgestellt und über den Fernübertragungsteil 17 an die Steuerungsstelle gemeldet. Es erfolgt dann die Abholung und die Entleerung der Müllsammeleinrichtung 1 oder zumindest des Müllsammelbehälters 5 durch den Entsorger.

### Legende

- 1: Müllsammeleinrichtung
- 2: Abrechnung der zugeführten Müllmenge 8, Anzeige der Verfahrensschritte, Aufnahme der Kennung 9
- 3: Bestimmung der Müllmenge 8
- 4: Verdichtung der zugeführten Müllmenge 8
- 5: Müllsammelbehälter des Müllspeicherteiles 15
- 6: Berechnung der Müllentsorgungskosten, der Kennung zugeordnet
- 7: Übermittlung von Steuerungsdaten des Verfahrensablaufes an eine Steuerstelle, insbesonders drahtlos
- 8: zugeführte Müllmenge, zur Bestimmung 3
- 9: Kennung des Müllablieferers
- 10: Müllbehandlungsteil der Müllsammeleinrichtung 1
- 11: Anzeigeteil des Müllbehandlungsteiles 10
- 12: Lese- und Einspeicherteil des Müllbehandlungsteiles 10
- 13: Wägevorrichtung des Müllbehandlungsteiles 10
- 14: Preßvorrichtung des Müllbehandlungsteiles 10
- 15: Müllspeicherteil der Müllsammeleinrichtung 1
- 16: Rechnerteil des Müllbehandlungsteiles 10
- 17: Fernübertragungsteil der Müllsammeleinrichtung 1
- 18: Schleuse zwischen Wägevorrichtung 13 und Preßvorrichtung 14
- 19: Datenspeichermittel, insbesonders Chipkarte
- 20: Beschickungstüre der Wägevorrichtung 13
- 21: Riegelvorrichtung der Beschickungstüre 20
- 22: Stellungssensor für die Schleuse 18
- 23: Stellungssensor für die Beschickungstüre 20
- 24: Drucksensor für die Preßvorrichtung 14

## Patentansprüche

1. Verfahren zur mengenkontrollierten Müllabgabe in eine Müllsammeleinrichtung und zur Bestimmung und Berechnung des abgegebenen Mülls, bei dem eine abgegebene unbestimmte Müllmenge einer Müllsammeleinrichtung zugeführt wird, in der die Müllmenge bestimmt wird, die anschließend selbsttätig in einen Müllsammelbehälter verbracht und insbesonders verdichtet wird und insbesonders mit dem Müllsammelbehälter zu einer Mülldeponie oder zu einer Großsammelstelle, insbesonders für die Weiterverarbeitung, transportiert wird, dadurch gekennzeichnet, daß die abgegebene unbestimmte Müllmenge (8), nach Kennung (9) der Abgabeberechtigung, der Menge nach bestimmt (3) wird und diese Mengendaten unter Zuordnung der Kennung (9) gespeichert werden und darauf insbesonders die Entsorgungskosten nach einem vorgegebenen Tarif berechnet (6) und abgerechnet (2) werden oder die Daten unter Zuordnung der Kennung (9) für eine spätere Abrechnung gespeichert werden, worauf die bestimmte Müllmenge (8), insbesonders nach vorheriger Verdichtung (4), dem Müllsammelbehälter (5) zugeführt wird.

2. Verfahren nach Anspruch 1, dadurch gekennzeichnet, daß die Erschöpfung der Speicherfähigkeit des Müllsammelbehälters (5) der Müllsammeleinrichtung (1) oder eine Störung des Verfahrensablaufes an der Müllsammeleinrichtung (1), insbesonders angezeigt (2) wird, eine weitere Abgabe von unbestimmten Müllmengen unterbunden und/oder einer, insbesonders zentralen, Steuerungsstelle, vorzugsweise drahtlos (7), übermittelt oder von dieser durch regelmäßige Abfrage festgestellt wird.

3. Verfahren nach Anspruch 1 oder 2, dadurch gekennzeichnet, daß die Bestimmung (3) der zugeführten Müllmenge (8), insbesonders die Kennung (9) der Abgabeberechtigung und vorzugsweise die Berechnung (6) und der Abrechnungsbetrag der Entsorgungsgebühr angezeigt (2) wird.

4. Verfahren nach einem der Ansprüche 1 bis 3, dadurch gekennzeichnet, daß die Berechnung (6) einer abgegebenen und bestimmten Müllmenge (8) nach der Anzeige (2) der bestimmten Müllmenge (8) durch Abbuchung derselben oder des Abrechnungsbetrages durch Speichern auf einem unverwechselbaren Datenspeichermittel (19) erfolgt, das gleichzeitig der Kennung (9) der Abgabeberechtigung dient und erst danach die weitere Bearbeitung der bestimmten Müllmenge (8) erfolgt.

5. Verfahren nach einem der Ansprüche 1 bis 4, dadurch gekennzeichnet, daß die Bestimmung (3) einer abgegebenen Müllmenge (8) durch Wägung erfolgt, das Gewicht angezeigt (2) wird und zur Berechnung (6) der gewogenen Müllmenge (8) bzw. des Abrechnungsbetrages dient, die nach der Abrechnung, insbesonders für sich getrennt, nach einer vorgeschalteten Verdichtung (4) dem Müllsammelbehälter (5) zugeführt wird.

6. Müllsammeleinrichtung zur Durchführung des Verfahrens nach Anspruch 1 oder einem der Ansprüche 2 bis 5, dadurch gekennzeichnet, daß die Müllsammeleinrichtung (1) aus einem Müllbehandlungsteil (10), einem Müllspeicherteil (15) und insbesonders einem Fernübertragungsteil (17) besteht.

7. Müllsammeleinrichtung nach Anspruch 6, dadurch gekennzeichnet, daß der Müllbehandlungsteil (10) einen Lese- und Einspeicherteil (12) für das berührungslose Lesen und Speichern von Daten eines Datenspeichermittels (19), insbesonders Chipkarte, einen Anzeigeteil (11) für die Anzeige des Verfahrensverlaufes der Kennung (9) der Abgabeberechtigung und der Müllbehandlung und von Störungen des Verfahrensablaufes und der Erschöpfung der Speicherfähigkeit des Müllspeicherteiles (15) und einen Rechnerteil (16) für die Steuerung des Verfahrensablaufes, die Verarbeitung der Mengenbestimmung (3) der Müllmenge (8), die Berechnung (6) und die Speicherung der Daten in diesem Rechnerteil (16), sowie vorzugsweise zur Speicherung vermittels des Einspeicherteiles (12), auf dem externen Datenspeichermittel (19), weiters eine Wägevorrichtung (13) zur Bestimmung (3) der Müllmenge (8) und eine Preßvorrichtung (14) zum Verdichten dieser Müllmenge umfaßt.

8. Müllsammeleinrichtung nach Anspruch 6 oder 7, dadurch gekennzeichnet, daß für die Kennung (9) der Abgabeberechtigung ein Schlüssel vorgesehen ist und das zugeordnete Schloß zumindest die Beschickungstüre der Müllsammeleinrichtung (1) oder deren in Gang setzen sperrt und als Leseteil (12) des Müllbehandlungsteiles (10) dient.

9. Müllsammeleinrichtung nach Anspruch 6, dadurch gekennzeichnet, daß der Müllspeicherteil (15) im wesentlichen den Sammelbehälter (5) umfaßt, in dem die einzelnen, getrennt voneinander bestimmten Müllmengen (8) nach Verdichtung (4) in der Preßvorrichtung (14) gesammelt werden.

10. Müllsammeleinrichtung nach Anspruch 6 bis 9, dadurch gekennzeichnet, daß der Müllbehandlungsteil (10) eine Beschickungstüre (20) für die Zufuhr der Müllmenge (8) aufweist, die mit einer Riegelvorrichtung (21) verriegelbar ist, die nach Kennung (9) der Abgabeberechtigung, insbesonders eines Datenspeichermittels (19) durch den Lese- und Einspeicherteil (12) vom Rechnerteil (16) entriegelt und nach Zuführung zur Verdichtung (4) der Müllmenge (8) in die Preßvorrichtung (14) wieder verriegelt wird.

11. Müllsammeleinrichtung nach Anspruch 6 bis 10, dadurch gekennzeichnet, daß zwischen der Wägevorrichtung (13) und der Preßvorrichtung (14) eine Schleuse (18) angebracht ist, die verschlossen ist und die nach Bestimmung (3) der Müllmenge (8) und nach Einspeichern im Rechnerteil (16) oder nach Berechnung (6) und Einspeichern auf einem externen Datenspeichermittel (19) durch den Lese- und Einspeicherteil (12), vom Rechnerteil (16) her geöffnet und nach Übertritt der gewogenen Müllmenge in die Preßvorrichtung (14) oder direkt in den Müllsammelbehälter (5) wieder geschlossen wird.

12. Müllsammeleinrichtung nach einem der Ansprüche 6 bis 11, dadurch gekennzeichnet, daß zusätzlich zu den Sensoren des Lese- und Einspeicherteiles (12) ein Stellungssensor (22) für die Schleuse (18) zur Preßvorrichtung (14) und ein Stellungssensor (23) für die Beschickungstüre (20) zur Wägevorrichtung (13), sowie ein Drucksensor (24) für die Preßvorrichtung (14), mit dem Rechnerteil (16) verbunden sind.

13. Müllsammeleinrichtung nach einem der Ansprüche 6 bis 12, dadurch gekennzeichnet, daß der Rechnerteil (17) dem Fernübertragungsteil (17) die Daten über den Verfahrensablauf und insbesonders bei Erreichen des vorbestimmten Gesamtsammelgewichtes des Müllsammelbehälters (5) und/oder bei Erreichen des vorbestimmten Grenzpreßdruckes an der Preßvorrichtung (14), eine Meldung über die Erschöpfung der Speicherfähigkeit der Müllsammeleinrichtung (1) zur Weiterleitung an eine, vorzugsweise zentrale, Steuerungsstelle übergibt.
